# EUROPEAN PATENT APPLICATION

(11) **EP 4 198 759 A1**
(43) Date of publication of application: **21.06.2023**
(21) Application number: 21215628.5
(22) Date of filing: 17.12.2021
(51) Int. Cl.: G06F 16/22

(54) **DATABASE SYSTEM AND METHOD**

(71) Applicant: Aptiv Technologies Limited, St. Michael (BB)
(72) Inventor: Kippert, Stefan, 42289 Wuppertal (DE); Cremer, Peet, 40239 Düsseldorf (DE)
(74) Representative: Vigand, Philippe

(57) **Abstract**

A database system is used for storing data to be used in a machine learning algorithm. The database system contains a binary storage component, the binary storage component comprising a plurality of binary elements, wherein each binary element comprises a first plurality of data fields ordered according to a binary data storage framework, and a metadata component, the metadata component comprising a plurality of metadata elements, each metadata element comprises a second plurality of data fields and a reference to at least one binary element wherein the metadata component is configured to order the second plurality of data fields in each metadata element according to a metadata storage framework and an intermediate component configured to adapt the binary data storage framework of the binary elements to the metadata storage framework of the metadata component. A search request is received, the search request comprising at least a first data search reference. The first data search reference is extracted from the search request and is compared with the second plurality of data fields to derive a portion of the binary storage component. The portion is extracted from the binary storage component.

## Description

### TECHNICAL FIELD

The present disclosure relates to the field of database systems and methods for retrieving data therefrom. Such a system can be used for example for storing training data relating to training a machine learning algorithm to be used in vehicles.

### BACKGROUND

Data warehousing is a commonly used way for storing data in a manner that enables relevant users to search for and access it. Data warehouses are used for many data-driven applications. One such application is storing data that is used to train or validate machine learning algorithms. Another example of an application for a data warehouse is algorithm verification, e.g., for verifying the efficacy of visual detection algorithms such as may be used in vehicles.

In order to be used for training or verification of algorithms, it is typically required that all data stored in the data warehouse is suitably annotated. The amount of data to be stored for use in such applications can be significant. Further, the amount of data may increase significantly over time. Processing and storing such large amounts of data is time consuming and resource intensive. Further, in order to enables processing of such data, the data is typically stored in a human-readable format inside a searchable database. Whilst this enables the data to be searched and processed by users, it is inefficient and increases the resources needed to store the data.

To reduce the resources required for storing the data, it is possible to store the data as compressed binary data. For example, the data may be stored in a binary large object, commonly referred to as a BLOB. However, this negates the accessibility and searchability achieved by storing data in a database.

Therefore, there is a need for a resource-efficient database system that enables data to be searched for and retrieved in an efficient manner.

### SUMMARY

The present disclosure concerns a database system for storing and retrieving training data for a machine learning algorithm, the system comprising:
a binary storage component, the binary storage component comprising a plurality of binary elements, wherein each binary element comprises a first plurality of data fields ordered according to a binary data storage framework;
a metadata component, the metadata component comprising a plurality of metadata elements, each metadata element comprises a second plurality of data fields and a reference to at least one binary element wherein the metadata component is configured to order the second plurality of data fields in each metadata element according to a metadata storage framework; and
an intermediate layer configured to adapt the binary data storage framework of the binary elements to the metadata storage framework of the metadata component.

By using a separate component to store the metadata and the binary data separately, storage efficiency in the binary storage component can be maximized whilst enabling quick and efficient searching and querying of the data by way of the metadata.

Additional features of the database system are provided in the dependent claims of the present disclosure.

The present disclosure further concerns a method for retrieving data in a database system, the database system comprising a binary storage component, the binary storage component containing a plurality of binary elements and each said binary element comprising a first plurality of data fields ordered according to a binary data storage framework, a metadata component, the metadata component comprising a plurality of metadata elements wherein each said metadata element comprising a second plurality of data fields and a reference to at least one binary element and wherein the metadata component is configured to order the second plurality of data fields in each metadata element according to a metadata storage framework, and an intermediate component configured to adapt the binary data storage framework of the binary elements to the metadata storage framework of the metadata component, the method comprising:
receiving a search request, the search request comprising at least a first data search reference;
extracting the at least first data search reference from the search request;
determining a portion of the binary storage component based on the at least first data search reference and the second plurality of data fields; and
extracting the portion from the binary storage component.

Advantageously, the step of determining comprises extracting at least one first identifier associated with at least one corresponding binary element stored in the binary storage component.

The present disclosure additionally concerns a computer system comprising the database system as set out above.

The present disclosure further concerns a computer program comprising instructions which, when the program is executed by a computer, cause the computer to carry out the method as set out above.

The present disclosure concerns a computer readable medium including program instructions which, when executed by a computer, cause the computer to carry out the method as set out above.

Further, the present disclosure concerns a computer system comprising the database as set out above being operable to carry out a method as set out above.

### BRIEF DESCRIPTION OF THE DRAWINGS

Other features, purposes and advantages of the invention will become more explicit by means of reading the detailed statement of the non-restrictive embodiments made with reference to the accompanying drawings.
Figure 1 shows a database system for storing and retrieving training data for an algorithm.
Figure 2 illustrates a method for retrieving data in a database system.
Figure 3 shows schematically the method shown in Figure 2.
Figure 4 illustrates an embodiment of a database system.

### DETAILED DESCRIPTION

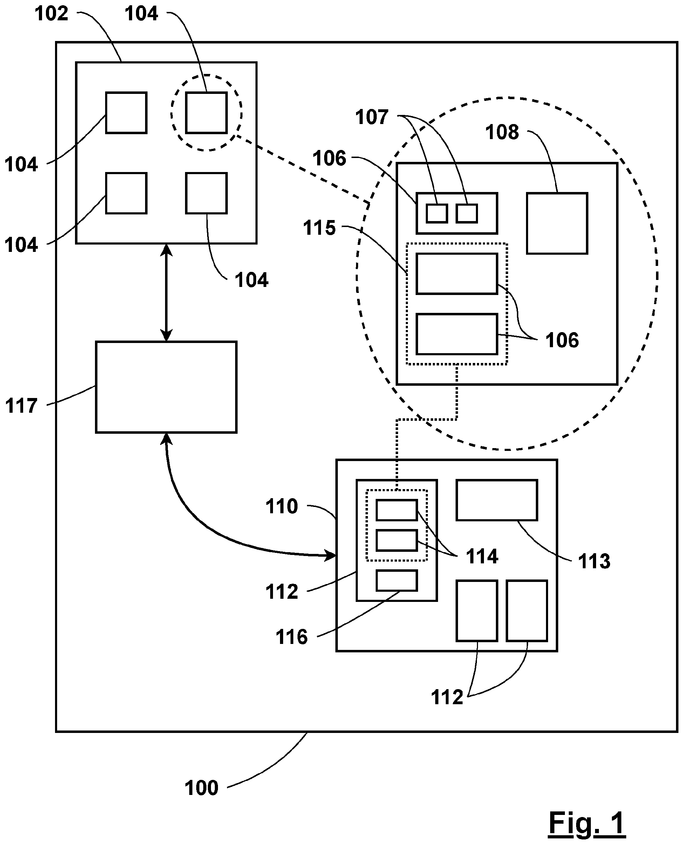

A first implementation of the invention will now be discussed with reference to Figure 1.

A database system 100 has a binary storage component 102, the binary storage component containing a plurality of binary elements 104, wherein each binary element comprises a plurality of first data fields 106 ordered according to a binary data storage framework.

The database system 100 additionally has a metadata component 110, the metadata component containing a plurality of metadata elements 112, each metadata element comprises a second plurality 114 of data fields and a reference 116 to at least one binary element, the metadata component being configured to order the second plurality of data fields in each metadata element according to a metadata storage framework.

The database system 100 additionally has an intermediate component 117 configured to adapt the binary data storage framework of the binary elements 104 to the metadata storage framework of the metadata component 110.

The database system 100 may be implemented in a suitable hardware architecture. Any suitable hardware architecture may be used. In some examples, the database system is implemented in a single computing system. In other examples, the database system is implemented in a plurality of computing systems connected by way of a network. In yet other examples, the database system is implemented wholly or partially in a cloud computing system. It will be appreciated that a number of specific implementations may be envisaged, and that such implementations may be, at least partially, dependent on the requirements and properties of the computing system(s).

The binary storage component 102 is used to store the majority of the data to be stored in the database system. The binary storage component may be implemented in any suitable fashion. Due to the large amount of data that may be stored in the binary storage component, it is advantageous if the data or information is stored as efficiently as possible. Additionally, it is advantageous if the data stored in the binary storage component is compressed so as to minimize the storage space required for storing the data. However, as discussed above, such efficiency and compressability reduces the searchability and queryability of the data.

Each of the binary elements 104 may have any suitable format, size and/or encoding. In some examples, each of the binary elements has the same format. In some examples, each of the binary elements has an individual format. In some examples, each of the binary elements 104 has an individual size. However, in the present example, as well as in the examples discussed in the following, each of the binary elements 104 has a fixed size. Whilst this does require that each binary element is properly formatted, which may increase the workload during creation of the binary storage component 102, it increases the speed with which the binary storage component 102 can be queried. In turn, this increases the speed with which a particular piece of data can be retrieved.

Each of the binary elements 104 may comprise any suitable first plurality of data fields 106. Each data field contains one or more relevant or suitable data elements 107. In some examples, the binary storage component 102 consists of unstructured data. However, in order to be queryable or searchable, the binary elements 104 must be ordered in a suitable manner in order for the data content to be retrieved. In some examples, the binary elements contain semi-structured or structured data.

The binary elements 104 in the binary storage component 102 may be ordered in any suitable structure or according to any suitable organizational methodology. For example, the binary elements 104 in the binary storage component 102 may be ordered according to a particular parameter or variable contained in the binary element. In an example, the binary elements 104 are ordered according to a time stamp.

It will be appreciated that, whilst described in the present disclosure as single entities, the binary elements 104 can, in principle, equally well be comprised of a plurality of sub-elements. In some examples, some portions of a binary element may be stored separately from other portions of the binary element. For purposes of clarity and conciseness, however, binary elements will, in the present disclosure, be exclusively described as singular entities.

Similarly to the binary elements 104, the first plurality of data fields 106 within each of the binary elements can be ordered or structured in a suitable manner. In some examples, the first plurality of data fields 106 in each of the binary elements in the binary storage component are ordered according to a first framework.

The framework may be a standard framework, such as, without limitation: a hierarchy; clustering; a combination of a hierarchy and clustering. In some examples, the framework is defined in dependence on the data to be stored in the data fields 106. This allows the framework to be customized to the specific data to be stored in the various data fields, which ensures that the data is stored as efficiently as possible. In some examples, at least some of the data fields depend on the formatting, encoding or data type of the binary element and/or binary storage component. In some examples, the framework is defined in dependence on one or more desired or advantageous properties. Purely for illustrative purposes, a clustering framework may require a similar amount of storage space or resources as a hierarchical framework, or in some cases more storage space, but may allow for faster data retrieval. Hence, if storage space/resources is a primary requirement, an operator may choose a hierarchical framework, whereas if data retrieval speed is the primary requirement the operator may choose a clustering framework. It will, however, be apparent to the skilled person that the present embodiments are fully functional independently of the specific framework chosen for the binary elements.

By way of illustration, in an example, each binary element contains the following data field: time stamp, class or type of an object, e.g., pedestrian, bicycle or vehicle; confidence factor; and location. In an exemplary implementation, the framework uses a hierarchical structure. In this implementation, the data fields of each binary element are sorted according to a primary data field, e.g., time stamp. The remaining data fields are then sorted in the following manner: object class or type; confidence factor; and location. This type of framework facilitates querying complete data objects of a given type.

In some situations, the framework uses a combination of a hierarchy and clustering. For example, the data fields of each binary element are sorted hierarchically according to a primary data field, the remaining data fields being clustered. Revisiting the above-mentioned illustrative example, in the present exemplary implementation, the binary elements are sorted hierarchically by the time stamp field, the remaining data fields being clustered. By clustering the remaining fields, querying or selecting certain data fields becomes quicker and simpler, as it becomes easier to retrieve all values for the queried field(s). It will, of course, be appreciated that the choice of primary data field may depend on the types of data fields as well as on the types of queries and use of the database system envisaged by the operators or users. For example, returning to the above illustrative example, if the object type is chosen as the primary data field, queries relating to data objects of a given type or class are facilitated.

For illustrative purposes, it will be assumed that, in the present example, the first data fields 106 are arranged according to a hierarchical structure. For example, each binary element contains the following data fields: time stamp; annotation category; and confidence factor. In the present example, similarly to the above example, the time stamp for each binary element 104 is used to order the binary elements within the binary storage component 102.

Additionally, each of the binary elements 104 may contain additional data or information. For example, each of the binary elements may contain a link or locational reference to a related or associated element, e.g., if the binary element is subdivided into a plurality of sub-elements. In other examples, each of the binary elements contain a byte order, e.g., little endian or big endian.

For illustrative purposes, in some examples, each of the binary elements 104 in the binary storage component 102 contains a first identifier 108. The first identifier enables the binary element 104 to be located or identified within the binary storage component 102. As described above, the binary storage component is optimized for efficient storage of information or data rather than efficient data retrieval.

The first identifier may contain any suitable information or data, and may have any suitable format. In an example, the first identifier 108 is a start byte of the respective binary element. In other examples, the first identifier is a byte range. The byte range may be defined in a relevant fashion. In some instances, a byte range consists of a start byte and an end byte, whereas in other instances a byte range consists of a start byte and a length or number of elements. In yet other examples, the first identifier is a number of elements. This may be the case in situations wherein documents have a fixed size.

It will be appreciated that, whilst the binary storage component 102 and the binary elements 104 have described separately in the above, this is purely for purposes of conciseness and ease of understanding. It will, of course, be appreciated that the binary storage component 102, the binary elements 106 and the data fields 106 contained therein, in principle, could be described as a single organizational framework. This will be illustrated further in the below.

The metadata component 110 may be implemented in a suitable fashion and may contain any suitable number of metadata elements 112. In addition to the metadata elements 112, in some examples, the metadata component contains additional data 113 or information. An example of additional data will be discussed in more detail below.

The metadata component 110 may be configured to order the second plurality of data fields in each metadata element according to any suitable metadata storage framework. Similarly to the binary storage framework described above, the metadata storage framework may be a standard framework, such as, without limitation: a hierarchy; or clustering; a combination of a hierarchy and clustering. As described above, different frameworks provide different advantages, and the choice of framework may be dependent on the specific data stored in the binary storage component, the intended use or application of the data, and/or on one or more properties of the database system or any components thereof.

Each metadata element 112 in the metadata component 110 may contain any suitable data or information. In some examples, the metadata component 110 contains data or information that is substantially identical to data or information that is stored in one or more of the binary elements 104 of the binary storage element 102. In an example, each metadata element 112 of the metadata component 110 contains a subset of the data or information stored in a respective binary element 104 of the binary storage component 102. In some examples, the each of the metadata elements 112 in the metadata component 110 contains one or more references to data or information stored in one or more of the binary elements 104 of the binary storage component 102. In the present example, each of the metadata elements contains a second plurality of data fields 114, each of which corresponds to a respective one of the first plurality of data fields 106.

Each of the metadata elements 112 may contain any suitable subset of the data in the corresponding binary elements 104. It will be appreciated that, whilst it is, in principle, possible to include all of the data fields of a given binary element 104 in a corresponding metadata element 112, this would increase the storage requirement in the database system. In other terms, if a chosen subset of data fields is too large, the size of the metadata component is such that the amount of storage space saved by the binary storage component over a conventional storage component is negated.

Hence, it is advantageous if the subset is chosen so as to ensure that the overall storage requirement of the binary storage component and the metadata component is smaller than a corresponding searchable storage component. In this manner, searchability of the data is maintained whilst reducing the storage requirement.

In the present example, purely for illustrative purposes, each metadata element 112, contains a second plurality of data fields 114 that is a first subset 115 of the first plurality of data fields 106 stored in a respective one of the binary elements 104 in the binary storage component 102.

The subset may be chosen in a suitable manner. Typically, the specific data fields that form part of the subset will be those that are determined to have the greatest utility to a searching party.

As mentioned above, in addition to the metadata elements 112, the metadata component 110, in some examples, contains additional data 113. In an example, the additional data contains a structure descriptor, not explicitly shown in the present Figure but described in more detail below. The structure descriptor contains a partial or full definition of the structure of the binary storage framework.. In some examples, the structure descriptor defines the type and implementation of the binary storage framework implemented in the binary storage component 102. Further, in some examples, the structure descriptor additionally or alternatively describes the data fields contained in each of the binary elements 104. In other words, the structure descriptor functions as an index of the binary storage component and/or the binary elements contained therein. Hence, the structure descriptor informs a user, or other components interacting with the metadata component, of the required structure to be used for any data contained in a query submitted to the database system. In some examples, the structure descriptor may contain additional or supplemental data or information.

The structure descriptor may, in some examples, be used during processing of the binary storage component or the binary elements. In other examples, the structure descriptor is used during operations, e.g., when processing search requests directed to data that may be stored in the binary storage component.

As described above, the intermediate component 117 (which may also be referred to as an 'intermediate layer') is configured to configured to adapt the binary data storage framework of the binary data elements to the metadata storage framework of the metadata component. The intermediate component may be implemented in any suitable fashion using a suitable methodology or framework in order to perform the intended function thereof. In effect, the intermediate component acts as a translation component between the binary data storage framework and the metadata storage component.

In some examples, the intermediate component is configured to adapt the binary data storage framework based on a configuration data storage file indicating the data storage framework of the metadata component. The configuration data storage file may be implemented in a suitable fashion. The configuration data storage file, in an exemplary implementation, describes a correspondence between the definitions in the structure descriptor of the metadata component and the binary data storage framework. Specifically, the configuration data storage file maps the correspondence of the binary data storage framework with that of the metadata storage framework. In a manner similar to that described with respect to the structure descriptor contained in the metadata component above, the configuration data storage file informs a user, or other components, of the required structure to be used for any data contained in a query submitted to the binary component of the database system. Additionally or alternatively, in some examples, the configuration data storage file contains a data schema describing the binary elements of the binary storage component. By implementing a data schema, the data types required for the binary storage component and the binary elements can be conveniently defined, which improves usability of the database system.

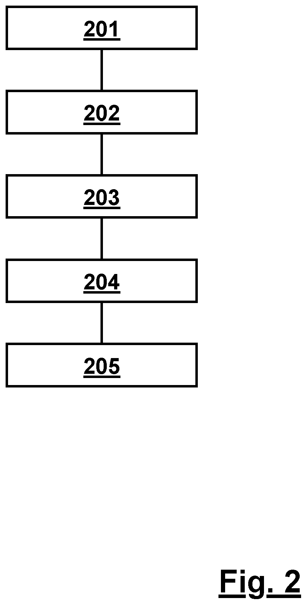

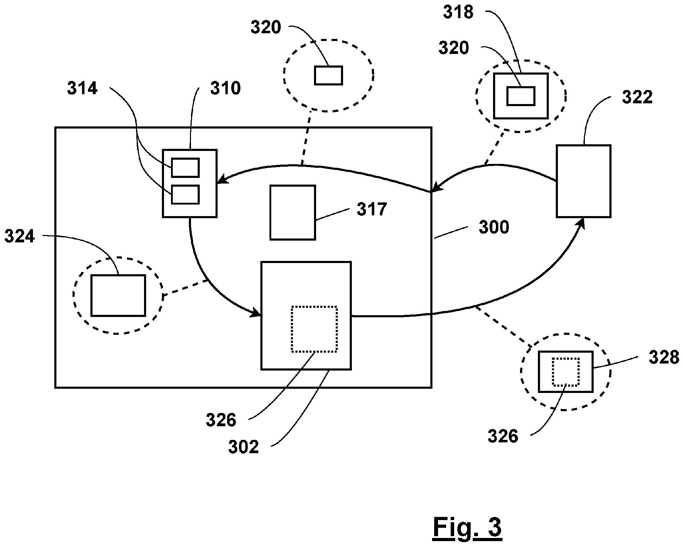

A method of retrieving data in a database system, such as the database system described with reference to Figure 1, will now be described with reference to Figure 2 and Figure 3. For ease of comparison with Figure 1, elements of Figure 3 similar to corresponding elements of Figure 1 are labelled with reference signs similar to those used in the preceding Figures, but with prefix "3".

The database system 300 contains a binary storage component, the binary storage component containing a plurality of binary elements wherein each said binary element containing a first plurality of data fields ordered according to a binary data storage framework, and a metadata component, the metadata component containing a plurality of metadata elements wherein each said metadata element comprises a second plurality of data fields and a reference to at least one binary element and wherein the metadata component is configured to order the second plurality of data fields in each metadata element according to a metadata storage framework. The database system further contains an intermediate component 317 configured to adapt the binary data storage framework of the binary elements to the metadata storage framework of the metadata component. Purely for purposes of conciseness of the present example, the intermediate component will not be discussed in great detail in the following. However, it will be appreciated that, as substantially described in the above examples, the intermediate component is nevertheless in use.

The method steps may be implemented in a suitable computing or processing system on which the database system is installed or stored. It will be appreciated that numerous implementations and configurations of suitable computing systems may be envisaged, including, without limitation: a desktop computer; a laptop computer; a server system; a cloud computing system; a tablet device; or a mobile device, e.g., a smart phone or other mobile computing device. For purposes of clarity and conciseness, no specific reference will be made in the following to the hardware components carrying out the various steps of the method. It will be appreciated that the specific nature of the hardware components may be dependent on the computing system. In some examples, each of the following steps may be performed by a specific component or element in the computing system. In other examples, the following steps may be carried out by one or more suitable or relevant processing components in the computing system.

In a first step 201, a search request 318 is received, the search request containing at least a first data search reference 320. The search request may originate with a suitable searching party 322 with access to the database system 300. The access may be local, e.g., a user operating a computer system or terminal that is part of the database system, or it may be remote, e.g. a computer system connecting remotely to the database system.

The first data search reference 320 may contain any suitable data or information of interest to a searching party, or a suitable reference to such data or information. In some examples, the first data search reference 320 contains one or more of, without limitation: partial or whole data parameters; data annotations; partial or whole data ranges; or data categories. Purely by way of illustration, in an example, the first data search reference 320 contains one or more of the following: geolocational or GPS data for an object of interest; movement data or data ranges related to the object of interest, e.g., speed or acceleration data; or class objects associated with or relating to the object of interest, e.g., annotations or descriptions. Some data items of interest to a searching party may, in some instances, be linked to one or more data items of interest.

In a second step 202, the at least first data search reference 320 is extracted from the search request 318. The extraction step may be performed in a suitable manner by way of an extraction unit 323. In some examples, the extraction step involves extracting a relevant portion of the first data search reference. In other examples, additional processing or operational steps are required, including, without limitation: formatting; decryption; or encoding.

In a third step 203, a portion 326 of the binary storage component 302 is determined based on the at least first data search reference 320 and the second plurality of data fields 314. The determining step may be performed in any suitable manner. In some examples, one or more sets of conditions, limitations or requirements may be employed during the determining step. This could, for example, be implemented by carrying out a filtering sub-step. Purely by way of example, a limited number of data results may be required or desired, necessitating that the relevant number of results are selected if the number of potential results is larger than the required or desired number. It will be appreciated that a number of specific implementations of the filtering sub step, or any other analogous sub step, may be envisaged within the scope of the present disclosure. In the present example, the a reference 324 to a portion 326 of the binary storage component 302 is determined.

The derived reference 324 may be directed to any suitable portion 326, which may also be known as a 'slice', of the binary storage component. In some examples, the derived reference may be a reference to a complete binary element. In other examples, the derived reference is a reference to a portion of a binary element. In yet other examples, the derived reference is a reference to a plurality of binary elements. In some examples, the derived reference is at least one first identifier associated with at least one corresponding binary element.

Returning to the above illustrative example, the derived reference contains any portion of the binary storage component that matches or falls within a specified range of one or more of: the geolocational data for the object of interest, data ranges related to the object of interest, or class objects associated with the object of interest.

In a fourth step 204, the portion 326 is extracted from the binary storage component 302. The extraction step is carried out in a suitable manner. The portion may contain any suitable part or portion of the binary storage component. In some examples, the portion contains at least one binary element 304.

In a fifth step 205, a search result 328 is provided. The search result is provided in a suitable manner. The search result may have any suitable contents. In the present example, the search result 330 contains the portion 326 that has been extracted from the binary storage component 302.

Purely for illustrative purposes, a number of exemplary implementations of the above-described systems and methods will now be discussed.

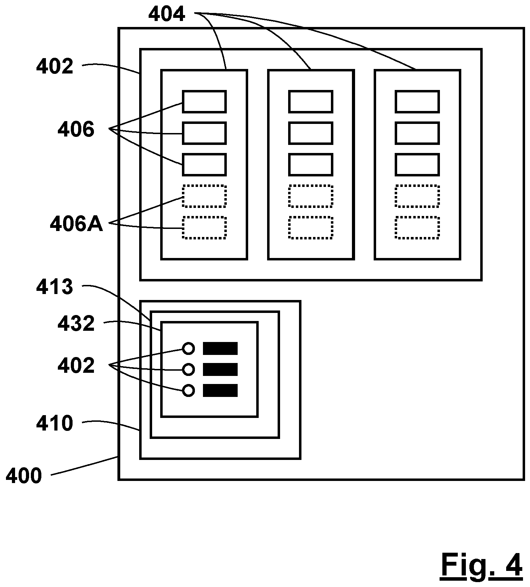

A first exemplary implementation of a binary storage component and metadata component of a database system 400 will now be discussed with reference to Figure 4. For ease of comparison with the preceding Figures, elements of Figure 4 similar to corresponding elements of Figure 1 or Figure 3 are labelled with reference signs similar to those used in the preceding Figures, but with prefix "4". It will be appreciated that, for purposes of clarity, some of the features or elements of the database system of Figure 1 are not described in the following, but that such features or elements may nevertheless be present.

In the present example, the binary storage component 402 is populated by a plurality of cuboid storage elements 404, each cuboid storage element containing a number of data fields 406. Each of these data fields may contain one or more data values or ranges. The general principles and use of cuboid storage are well known in the art and for purposes of conciseness will not be presented here. It will merely be noted that, in addition to the data stored in the data fields, the cuboid storage elements contain organizational data and metadata relating to the structure of the storage elements. In the present example, each of the cuboid storage elements 404 is used to store a values or parameters in the data fields. For illustrative purposes, similarly to the example discussed above, each of the cuboid storage elements contain: a time stamp; an annotation category; and a confidence factor.

In the present example, the metadata component contains a structure descriptor 413. The structure descriptor contains one or more hierarchy definitions 432, the one or more hierarchy definitions containing a list of data fields in the cuboid storage elements, the type or structure of data stored in each of the data fields, as well as organizational or structural data relating to the hierarchy, e.g., whether the data in the cuboid storage element is sorted or clustered.

The hierarchy definition 432 is used to define the number and types of the data fields 406 in each of the cuboid storage elements 404. Accordingly, the cuboid storage elements contain or utilise only data fields that correspond to the hierarchy definition. In some examples, the cuboid storage elements contain additional data fields 406A. However, if not defined in the hierarchy definition. Further, the hierarchy definition is used to define the hierarchical order of individual data fields.

Purely for illustrative purposes, in one example the hierarchy definition defines only 'time stamp', 'annotation' and 'confidence factor', which are therefore the only values that can be used in queries. In this example, the cuboid storage elements may contain data fields relating to 'time stamp', 'annotation', 'confidence factor', 'size' and 'location'. The latter two data fields, i.e., 'size' and 'location', cannot be used for queries even though the data is stored in the cuboid storage elements. In some examples, data fields may be stored in the cuboid storage elements wherein there is no requirement or need for querying said data fields.

It will be appreciated that the exemplary implementation of the invention discussed above is purely for illustrative purposes and is not intended to be limiting. It will also be appreciated that a number of alternative specific implementations and use-case scenarios may be envisaged within the scope of the present disclosure.

In one example, a database system is implemented wherein the binary component uses cuboid storage elements. In this example, each of the binary elements contains the following fields: timestamp; center, rotation, size, class annotation, confidence value, uuid, and a user-definable attribute.

The center, rotation and size fields are dependent specifically on the cuboid storage employed for the database system. For example, the center and size fields may be a 3-dimensional vector, and the rotation may be a quaternion. The class annotation is used to define the type or class of the data in the binary element, or the type or class of the object to which the data in the binary element relates. It may, for example be used to define whether the object is a vehicle, a pedestrian or an animal. The confidence value describes the confidence factor of one or more of the fields, e.g., the confidence factor of the class annotation being correct. The confidence value may be formatted or defined in any suitable manner, e.g., as a float. The uuid is a unique identifier attributed to the object in the binary element, and can be used for object tracking. The user-definable attribute contains any suitable or relevant information or data that is defined by the user.

As described, the data fields are stored in the binary cuboid storage elements. In the present example, the binary elements are stored in such a manner that the binary storage component has a fixed size. This enables the binary storage component to be compressed efficiently and for relevant portions or 'slices' to be located quickly. If the binary storage component was not of a fixed size, the time to locate a particular slice would increase.

In the present example, the data fields of the binary elements are sorted or clustered according to a hierarchy. Specifically, the data fields are primarily sorted by timestamp, followed by all entries being clustered by class annotation, and in turn sorted by the confidence value of the class annotation.

The metadata component contains a number of metadata elements, each of which contain a subset of data fields of the binary elements. Additionally, the metadata component contains a structure descriptor, which contains the following: data field name; data type(s) used in the binary storage components; and hierarchy type, e.g. whether the data is sorted or clustered.

As discussed above, the metadata elements contain a subset of the data fields of the corresponding binary elements. Additionally, each of the metadata elements contain the at least the following additional fields: start byte of the corresponding binary element; and the number of class annotations for a given timestamp.

In another example, the system is intended for use in a navigation system for a road vehicle or other vehicle. In this example, the binary storage component contains binary elements that are implemented as cuboid storage elements, similarly to those discussed in the preceding example. In this example, the cuboid storage elements contain the following data fields: geographical object class, geostring location for each object, uuid for each object, and timestamp for each object. In this example, the structure descriptor defines the following queryable data fields: geographical object class and geostring location for each object.

In a third example, the database system is intended for use with traffic data. In the present example, the data relates to traffic or usage of a given section of road. A user may, for example, wish to request data relating to a specific scenario, e.g., whether pedestrians are using one side or the other of a road during hours of darkness.

The data fields in the binary elements are arranged hierarchically: firstly ordered by time stamp, and secondly clustered by class annotation. The binary elements may contain further data fields, such as: geographical position or geolocation of the object; object speed; or user-definable attributes.

The metadata element contains a hierarchy descriptor which describes the framework used in the binary storage component. Each metadata element contains the following data fields: time stamp; and class annotation. Due to the large amount of storage required to store the data fields, the metadata elements do not store the geolocation field in the present example. This field is only stored in the binary elements, which means that a user cannot use geolocation in a query. Similarly to the examples above, each metadata element defines the start and end bytes of the corresponding binary element, which enables relevant slices of the binary storage component to be located efficiently.

In another example, the system is intended for use in a road vehicle, and specifically for use in a so-called "lane assist" system, which assists a driver or user of the vehicle with maintaining the vehicle in the proper road lane. In this example, the binary storage component stores data generally relating to road lanes, The cuboid storage elements contain the following data fields: time stamp, lane type, lane annotation, and data relating to individual lane markings. In this example, the structure descriptor defines the following queryable data fields: time stamp, lane type and lane annotation.

In a further example, the system is implemented in a computing device that is used to receive and transmit requests to a remote device that connects to the computing device via a public communication network. In this example, any data that is transmitted via the communication network may be intercepted by unauthorized 3^{rd} parties. Therefore, the structure descriptor defines only data fields that would not provide an unauthorized 3^{rd} party with information that they are not authorized to see, or which will not provide the 3^{rd} party with any usable or actionable data.

It will be understood that various modifications and/or improvements obvious to the person skilled in the art may be made to the various embodiments of the invention described in the present description without departing from the scope of the invention defined by the appended claims.

## Claims

1. A database system for storing and retrieving training data for use with a machine learning algorithm, the system comprising:
a binary storage component, the binary storage component comprising a plurality of binary elements, wherein each binary element comprises a first plurality of data fields ordered according to a binary data storage framework;
a metadata component, the metadata component comprising a plurality of metadata elements, each metadata element comprises a second plurality of data fields and a reference to at least one binary element wherein the metadata component is configured to order the second plurality of data fields in each metadata element according to a metadata storage framework; and
an intermediate layer configured to adapt the binary data storage framework of the binary elements to the metadata storage framework of the metadata component.

2. A database system according to claim 1, wherein the intermediate component is configured to adapt the binary storage framework based on a configuration data storage file indicating the data storage framework of the metadata component.

3. A database system according to claim 2, wherein the first plurality of data fields and/or second plurality of data fields are ordered according to one of: a hierarchical framework; or a clustering framework.

4. A database system according to claim 1 or claim 2, wherein each binary element in the binary storage component further comprises a first identifier.

5. A database system according to claim 3, wherein the first identifier is one of: a start byte of the respective binary element; or a byte range of the respective binary element.

6. A database system according to claim 5 or claim 6, wherein the reference to at least one binary element in each metadata element comprises a reference to the first identifier.

7. A database system according to any of claims 1 to 6, wherein the second plurality of data fields in each metadata element is a subset of the first plurality of data fields of each of the binary elements.

8. A database system according to any of claims 1 to 7, wherein each of the data fields in the second plurality of data fields comprises a reference to a corresponding data field of the first plurality of data fields of each binary element.

9. A database system according to any of claims 1 to 8, wherein the metadata component comprises a structure descriptor, the structure descriptor comprising a definition of the structure of the first framework.

10. A method for retrieving data in a database system, the database system comprising a binary storage component, the binary storage component containing a plurality of binary elements and each said binary element comprising a first plurality of data fields ordered according to a binary data storage framework, a metadata component, the metadata component comprising a plurality of metadata elements wherein each said metadata element comprising a second plurality of data fields and a reference to at least one binary element and wherein the metadata component is configured to order the second plurality of data fields in each metadata element according to a metadata storage framework, and an intermediate component configured to adapt the binary data storage framework of the binary elements to the metadata storage framework of the metadata component, the method comprising:
receiving a search request, the search request comprising at least a first data search reference;
extracting the at least first data search reference from the search request;
determining a portion of the binary storage component based on the at least first data search reference and the second plurality of data; and
extracting the portion from the binary storage component.

11. A method according to claim 10 wherein the step of determining comprises extracting at least one first identifier associated with at least one corresponding binary element stored in the binary storage component.

12. A computer system comprising the database system of any of claims 1 to 9.

13. A computer program comprising instructions which, when the program is executed by a computer, cause the computer to carry out the method of claim 10 or 11.

14. A computer readable medium including program instructions which, when executed by a computer, cause the computer to carry out the method of claim 10 or 11.

15. A computer system according to claim 12, the computer system being operable to carry out the method of claim 10 or 11.
